# EUROPÄISCHE PATENTSCHRIFT

(11) **EP 0 695 867 B1**
(45) Veröffentlichungstag und Bekanntmachung des Hinweises auf die Patenterteilung: **20.01.1999**
(21) Anmeldenummer: 95109695.7
(22) Anmeldetag: 22.06.1995
(51) Int. Cl.: F02F 11/00, F16J 15/12

(54) **Rahmenförmige Dichtung, insbesondere Deckeldichtung für Verbrennungsmotoren**
Frame-shaped gasket especially for cover of an internal combustion engine
Joint en forme de cadre en particulier pour couvercle de moteur à combustion interne

(30) Priorität: 01.08.1994 DE 4427168
(43) Veröffentlichungstag der Anmeldung: 07.02.1996
(73) Patentinhaber: Elring Klinger GmbH, 72581 Dettingen (DE)
(72) Erfinder: Böhringer, Peter, D-72584 Hülben (DE); Schmauder, Karl, D-72584 Hülben (DE)
(74) Vertreter: Hoeger, Stellrecht & Partner

(56) Entgegenhaltungen:
- EP-A- 0 455 579
- DE-A- 4 222 734
- DE-A- 4 223 486
- DE-A- 4 223 487

## Beschreibung

Hauben und Deckel von und an Verbrennungsmotoren werden aus Gewichtsgründen dünnwandig konstruiert, und aus Kostengründen werden für die Befestigung solcher Hauben bzw. Deckel nur einige wenige Schrauben eingesetzt, die über den Umfang der Haube bzw. des Deckels verteilt und infolgedessen in verhältnismäßig großen Abständen voneinander angeordnet sind.

Typische Beispiele für solche Hauben bzw. Deckel sind der auf dem Zylinderkopf eines Verbrennungsmotors angebrachte Zylinderkopfdeckel, die unten am Motorblock befestigte Ölwanne, der Gehäusedeckel eines Getriebegehäuses, das am Motorblock anzubringende Gehäuse einer Wasserpumpe oder der demontierbare Teil eines Ölfiltergehäuses.

Der große Abstand der Befestigungsschrauben voneinander hat in Verbindung mit der geringen Wandstärke der Haube bzw. des Deckels zur Folge, daß in den Bereichen zwischen den Befestigungsschrauben die Dichtung nur unter einer recht geringen Flächenpressung steht (ca. 3 N/mm²), die bei Verwendung einer üblichen Weichstoffdichtung für eine ausreichende Abdichtung zu gering ist.

Deshalb werden für die Abdichtung der Fuge bzw. des Dichtspalts zwischen einer solchen Haube bzw. einem solchen Deckel und dem diese bzw. diesen tragenden Bauteil heutzutage weitgehend Dichtungen eingesetzt, welche einen aus einem elastomeren Material bestehenden Dichtungskörper und ein sich längs des elastomeren Dichtungskörpers erstreckendes und mit dem elastomeren Material insbesondere durch Vulkanisieren verbundenes metallisches Verstärkungselement aufweisen, wobei das letztere den elastomeren Dichtungskörper formstabilisiert.

Damit der gummielastische Dichtungskörper beim Anziehen der Befestigungsschrauben im Schraubenbereich nicht zu stark verformt oder sogar beschädigt wird, hat es sich als notwendig erwiesen, an der Dichtung zumindest im Bereich der Befestigungsschrauben ein als Verformungsbegrenzer wirkendes Abstützelement vorzusehen, wobei diese Maßnahme im allgemeinen aus Kostengründen auf die Schraubenbereiche beschränkt wird.

Für die vorgenannten Zwecke verhältnismäßig verbreitet sind Elastomerdichtungen, deren in den gummielastischen Dichtungskörper eingebettetes metallisches Verstärkungselement von einem ausgestanzten Blechteil gebildet wird, welches einen in sich geschlossenen Rahmen bildet.

Repräsentativ für diesen Stand der Technik ist die Dichtung nach der DE-PS 38 31 414, bei der beim Ausstanzen des Verstärkungsblechs in diesem Schraubendurchgangsöffnungen und gleichzeitig in einem kombinierten Zieh- und Kaltfließpreßarbeitsgang die Schraubendurchgangsöffnungen umgebende, buchsenartige Abstützelemente erzeugt werden.

Die oft komplizierte Form der Dichtung erfordert aber ein kompliziertes und deshalb teueres Stanzwerkzeug, welches dadurch noch komplizierter und teuerer wird, daß mit ihm auch noch der Zieh- und Kaltfließpreßarbeitsgang durchgeführt werden soll, um im Zuge des Ausstanzens des Blechringes auch die Abstützelemente zu erzeugen. Hinzu kommt ein allen Dichtungen mit einem ausgestanzten rahmenförmigen Metallblech-Verstärkungselement gemeinsamer Nachteil, der darin zu sehen ist, daß beim Ausstanzen des Blechrahmens viel Abfall anfällt.

Den zuletzt aufgeführten Nachteil vermeidet zwar die Dichtung nach der DE-OS 42 23 487, bei deren Verstärkungselement es sich um ein Blechteil handelt, das ursprünglich die Form eines gestreckten Blechstreifens hatte, welcher durch ungefähr Z-förmiges Falten im Bereich der späteren Schraubendurchgangsöffnungen mit Abstützelementen versehen und anschließend durch Streckbiegen in einen geschlossenen Rahmen umgeformt und durch Stanzen mit den Schraubendurchgangsöffnungen versehen wurde. Abgesehen davon, daß das Umformen durch Streckbiegen schon an und für sich verhältnismäßig kompliziert ist, dürfte dieses Verfahren bei komplizierteren Formen der Dichtung und damit des metallischen Verstärkungselements überhaupt nicht mehr anwendbar sein.

Weitere Dichtungen der vorstehend beschriebenen Art ergeben sich aus der DE-PS 39 27 340 sowie der EP-A-0 455 579.

Bei allen diesen bekannten Dichtungen haben die vom Blech gebildeten Abstützelemente, welche beim Anziehen der Schrauben als dem Schutz des gummielastischen Dichtungskörpers dienende Verpressungsbegrenzungselemente wirken, auf voneinander abgewandten Seiten ebene Oberflächenbereiche, welche Teile der beiden Hauptoberflächen der Dichtung bilden, d. h. nicht etwa mit gummielastischem Werkstoff überzogen sind, wobei diese Oberflächenbereiche des Trägerblechs gegenüber angrenzenden, von dem elastomeren Material gebildeten Bereichen der beiden Hauptoberflächen der Dichtung auch etwas zurückgesetzt sein können.

Der Erfindung lag nun die Aufgabe zugrunde, eine rahmenförmige Dichtung mit einem Dichtungskörper aus einem gummielastischen Werkstoff und einem sich längs dieses Dichtungskörpers erstreckenden metallischen Verstärkungselement zu schaffen, welche sich verhältnismäßig einfach herstellen läßt, das Entstehen wesentlicher Mengen von Abfall vermeidet und über vom metallischen Verstärkungselement gebildete, den gummielastischen Dichtungskörper vor Beschädigungen wirksam schützende Abstützelemente zumindest im Bereich der Schraubendurchgangsöffnungen der Dichtung verfügt.

Ausgehend von einer rahmenförmigen Dichtung mit den Merkmalen des Oberbegriffs des Patentanspruchs 1, d. h. von einer Dichtung, wie sie beispielsweise die DE-OS 42 23 487 zeigt, läßt sich diese Aufgabe erfindungsgemäß dadurch lösen, daß als Verstärkungselement ein zu einem Rahmen gebogener Metalldraht verwendet wird, welcher zur Bildung der Verpressungsbegrenzungselemente und ihrer flachen Oberflächenbereiche einen von einem runden Querschnitt abweichenden abgeflachten Querschnitt aufweist.

Bei der Lösung der gestellten Aufgabe wurde von der Überlegung ausgegangen, daß auf dem Markt heute NC-gesteuerte Drahtbiegemaschinen angeboten werden, mit denen sich ein Metalldraht problemlos und kostengünstig in nahezu jede beliebige Form bringen läßt. Der abgeflachte Drahtquerschnitt kann entweder davon herrühren, daß von vorneherein mit einem Metalldraht entsprechender Querschnittsform gearbeitet wird, oder aber kann ein Metalldraht mit beispielsweise kreisrundem Querschnitt durch Prägen oder Formpressen mit einem abgeflachten Querschnitt versehen werden, und zwar entweder schon vor dem Biegen des Metalldrahts zur Rahmenform oder bevorzugt nach Bildung des Rahmens, jedoch vor der Herstellung des gummielastischen Dichtungskörpers an dem metallischen Verstärkungselement.

Da man schon aus Kostengründen normalerweise von einem Metalldraht mit kreisrundem Querschnitt ausgehen und dann dem Metalldraht durch Prägen oder Pressen eine abgeflachte Querschnittsform über seine ganze Länge verleihen wird, führt die erfindungsgemäße Gestaltung des Verstärkungselements noch zu einem weiteren Vorteil: Durch das Kaltverformen des Metalldrahts wird dessen Festigkeit beträchtlich erhöht, was nicht nur dazu führt, daß er die Schraubenkräfte aufnehmen kann, ohne verformt zu werden, sondern eine weit größere Formstabilität des vom Metalldraht gebildeten Verstärkungselements mit sich bringt; es hat sich nämlich gezeigt, daß ein aus einem Metalldraht kreisförmigen Querschnitts gebildetes, rahmenförmiges Verstärkungselement ein relativ labiles Gebilde ist, welches den elastomeren Dichtungskörper nicht in der erwünschten Weise formstabilisieren kann.

Aus der DE-PS 37 37 833 ist zwar schon eine Dichtung für einen Zylinderkopfdeckel bekanntgeworden, welche einen Dichtungskörper aus einem gummielastischen Werkstoff und ein aus gebogenem Draht hergestelltes metallisches Verstärkungselement besitzt, welches für eine Begrenzung des Preßdruckes beim Anziehen der die Dichtung einspannenden Bauteile sorgen soll; bei dieser bekannten Dichtung hat der Metalldraht jedoch überall einen kreisrunden Querschnitt, was zu dem vorstehend erläuterten Nachteil führt, und da dieses Verstärkungselement vollständig in den den Dichtungskörper bildenden gummielastischen Werkstoff eingebettet ist, kann es keine den gummielastischen Dichtungskörper wirksam vor Beschädigungen schützende Verpressungsbegrenzungselemente bilden: Wie eingangs erläutert wurde, sind bei den in Rede stehenden Hauben und Deckel zwischen den Befestigungsschrauben (wegen der verhältnismäßig großen Schraubenabstände) die auf die Dichtung einwirkenden Flächenpressungen ohnehin relativ gering, weshalb die Schrauben kräftig angezogen werden müssen; diese Maßnahme führt aber bei dieser bekannten Dichtung dazu, daß in den Bereichen der Schraubenöffnungen die den Metalldraht überdeckenden Elastomerschichten leicht zerstört werden können, weil der Draht auch dort einen kreisrunden Querschnitt besitzt, so daß das elastomere Material zwischen den Drahtkuppen und dem Zylinderkopf bzw. dem Zylinderkopfdeckel zerquetscht wird.

Die erfindungsgemäße Dichtung hingegen ist so gestaltet, daß der Metalldraht einen abgeflachten Querschnitt besitzt und dank seiner senkrecht zur Richtung der Schraubenkräfte verlaufenden flachen Oberflächenbereiche auch dann, wenn bei der erfindungsgemäßen Dichtung die Verpressungsbegrenzungselemente mit dem gummielastischen Werkstoff des Dichtungskörpers überzogen sind, nicht zu solch extremen Pressungsspitzen führt, wie sie bei der vorstehend erläuterten bekannten Dichtung nach der DE-PS 37 37 833 im elastomeren Material zwischen den Drahtkuppen und beispielsweise dem Zylinderkopf bzw. dem Zylinderkopfdeckel auftreten.

Wie sich aus dem Vorstehenden ergibt, sind die besagten Verpressungsbegrenzungselemente an sich nur in den Bereichen der Schraubenöffnungen der Dichtung erforderlich, so daß der Metalldraht außerhalb dieser Bereiche ohne weiteres auch innerhalb des gummielastischen Dichtungskörpers verlaufen kann. Vor allem dann, wenn letzteres aus irgendwelchen Gründen erwünscht ist, lassen sich mit dem Metalldraht wirksame Verpressungsbegrenzungselemente dadurch bilden, daß der Metalldraht im Bereich zumindest eines Teils der Schraubenöffnungen jeweils zu einer ein Verpressungsbegrenzungselement bildenden Drahtwendel geformt ist, eine Maßnahme, welche sich mit einer NC-gesteuerten Drahtbiegemaschine problemlos durchführen läßt. Wenn bei einer erfindungsgemäßen Dichtung der Metalldraht einen abgeflachten Querschnitt aufweist, können sich beim Anziehen der Befestigungsschrauben die Windungen der Drahtwendeln nicht relativ zueinander verschieben, so wie dies dann der Fall sein könnte, wenn mit einem Draht kreisrunden Querschnitts Drahtwendeln gebildet werden.

Zur Erzeugung des abgeflachten Querschnitts, gegebenenfalls aber auch zu dem Zweck, die Dicke des metallischen Verstärkungselements in den Bereichen der Schraubendurchgangsöffnungen zu kalibrieren und/oder in anderen Bereichen die Dicke des Verstärkungselements an die bereichsweise unter Umständen recht unterschiedliche Steifigkeit der gegeneinander abzudichtenden Bauteile anzupassen, ist, wie bereits erwähnt, bei bevorzugten Ausführungsformen der Erfindung der Metalldraht durch Prägen bzw. Formpressen mit einem abgeflachten Querschnitt versehen worden, wobei aus den vorstehend geschilderten Gründen der Abflachungsgrad des Metalldrahtes längs der Dichtung insbesondere unterschiedlich sein kann.

Weitere Merkmale, Vorteile und Einzelheiten der Erfindung ergeben sich aus der nachfolgenden Beschreibung sowie der beigefügten zeichnerischen Darstellung zweier besonders vorteilhafter Ausführungsformen der erfindungsgemäßen Dichtung, wobei es sich bei diesen Ausführungsformen um Dichtungen zwischen dem Zylinderkopf und dem Zylinderkopfdeckel eines Hubkolben-Verbrennungsmotors handelt; in der Zeichnung zeigen:
- Fig. 1: eine Draufsicht auf das gesamte Metalldraht-Verstärkungselement der ersten Ausführungsform der erfindungsgemäßen Dichtung ohne elastomeren Dichtungskörper;
- Fig. 2: einen Schnitt durch das metallische Verstärkungselement in einem Bereich zwischen zwei Schraubendurchgangsöffnungen gemäß der Linie A-B in Fig. 1;
- Fig. 3: einen weiteren Schnitt durch das metallische Verstärkungselement, und zwar im Bereich einer Schraubendurchgangsöffnung gemäß der Linie C-D in Fig. 1;
- Fig. 4: einen der Fig. 2 entsprechenden Schnitt, jedoch durch die Dichtung samt elastomerem Dichtungskörper;
- Fig. 5: einen der Fig. 3 entsprechenden Schnitt gleichfalls samt elastomerem Dichtungskörper;
- Fig. 6: eine Draufsicht auf das metallische Verstärkungselement der zweiten Ausführungsform der erfindungsgemäßen Dichtung ohne elastomeren Dichtungskörper;
- Fig. 7: eine Draufsicht auf die gesamte zweite Ausführungform der erfindungsgemäßen Dichtung;
- Fig. 8: einen Schnitt nach der Linie E-F in Fig. 7 und
- Fig. 9: einen Schnitt nach der Linie G-H in Fig. 7.

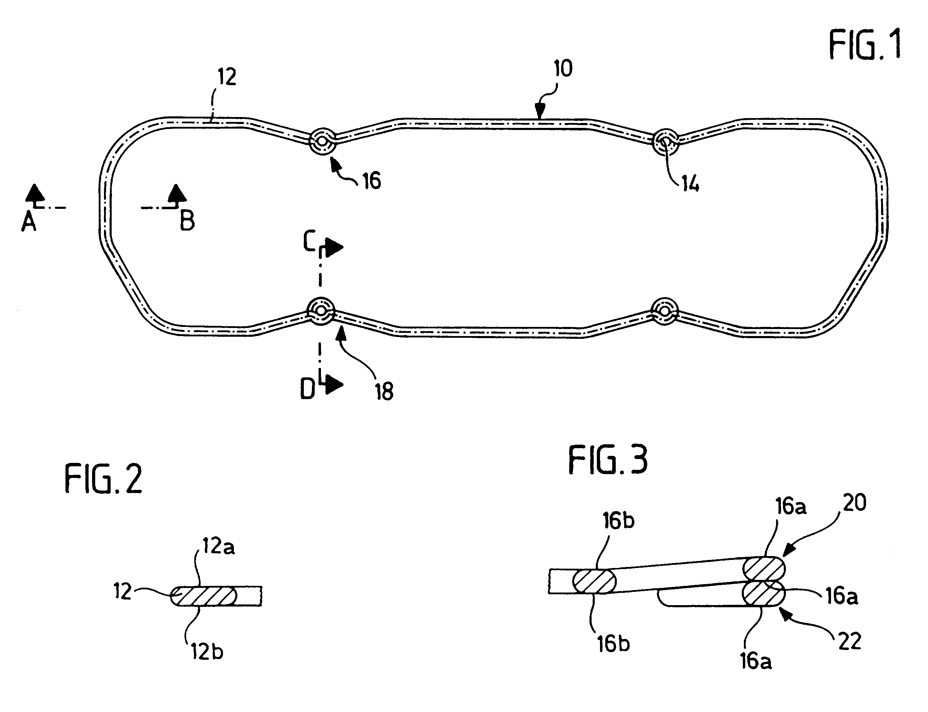

Das in Fig. 1 dargestellte Metalldraht-Verstärkungselement wurde als Ganzes mit 10 bezeichnet; es wurde aus einem Metalldraht 12 durch entsprechendes Biegen sowie dadurch hergestellt, daß zwei zunächst freie Enden des Metalldrahtes an irgendeiner geeigneten Stelle des Verstärkungselements stumpf miteinander verbunden wurden, insbesondere durch Schweißen. Das Verstärkungselement bildet vier Schraubendurchgangsöffnungen 14, und zwar dadurch, daß an den Stellen dieser Schraubendurchgangsöffnungen der Metalldraht 12 jeweils zu einer Drahtwendel 16 gebogen wurde.

Wie die Fig. 1 erkennen läßt, ist der Metalldraht 12 zu beiden Seiten einer jeden Drahtwendel 16 in Richtung auf das Innere des Verstärkungselements 10 eingebogen und bildet so eine Einbuchtung 18, was zusammen mit der Lage der jeweiligen Drahtwendel 16 relativ zu den zu beiden Seiten der Drahtwendel von dieser wegführenden Drahtbereichen dazu führt, daß der Metalldraht die betreffende Schraubendurchgangsöffnung 14 über einen Winkel von mehr als 360° umschlingt, vorzugsweise über einen Winkel von ungefähr 480 - 500°.

Nach dem Biegen des Metalldrahtes 12 in die Form des Verstärkungselements 10 wurde letzteres in einem entsprechend gestalteten Präge- und Formpreßwerkzeug so verformt, daß der ursprünglich kreisrunde Querschnitt des Metalldrahtes 12 in den Bereichen zwischen den Schraubendurchgangsöffnungen 14 zu einem verhältnismäßig flachen Querschnitt mit großflächigen Abflachungen 12a und 12b (siehe Fig. 2) verformt wurde, während im Bereich der Drahtwendeln 16 die Abflachung weniger ausgeprägt ist, so daß in Fig. 3 erkennbare Abflachungen 16a und 16b entstehen, die weniger breit sind bzw. eine geringere Fläche aufweisen als die Abflachungen 12a und 12b.

Der Prägevorgang wird auperdem erfindungsgemäß so gestaltet, daß im Bereich einer jeden Drahtwendel 16 deren obere Windung 20 und deren untere Windung 22 senkrecht zur Ebene des Verstärkungselements 10 zumindest ungefähr gleich weit über diejenigen Bereiche des Metalldrahtes 12 überstehen, die zu der betreffenden Drahtwendel 16 führen bzw. von dieser wegführen.

Wie die Fig. 3 weiter erkennen läßt, führen die Abflachungen 16a dazu, daß die obere und die untere Windung 20 bzw. 22 einander nicht linienförmig berühren, sondern flächig aufeinanderliegen, wodurch das Risiko vermieden wird, daß sich beim Anziehen der Befestigungsschrauben die beiden Windungen gegeneinander verschieben.

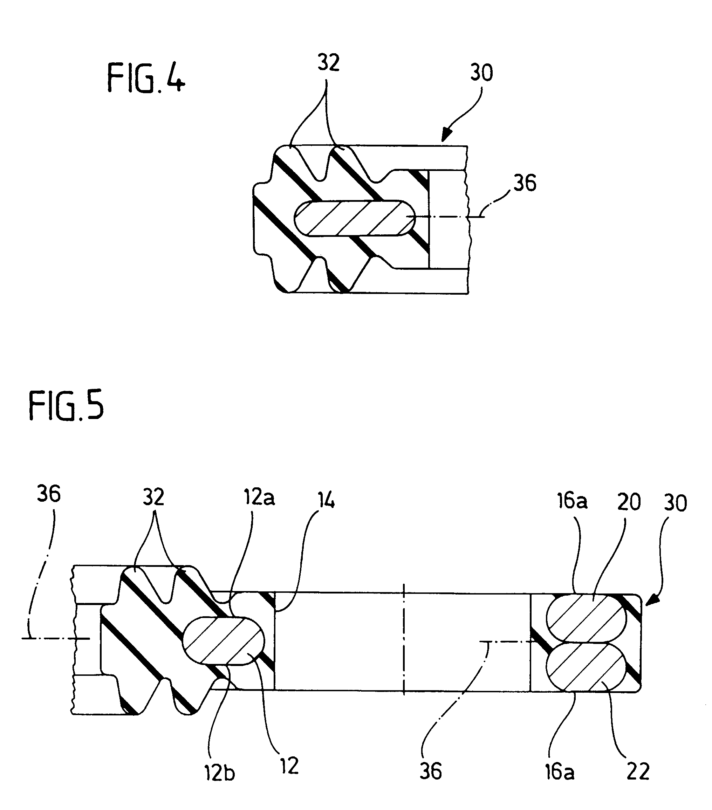

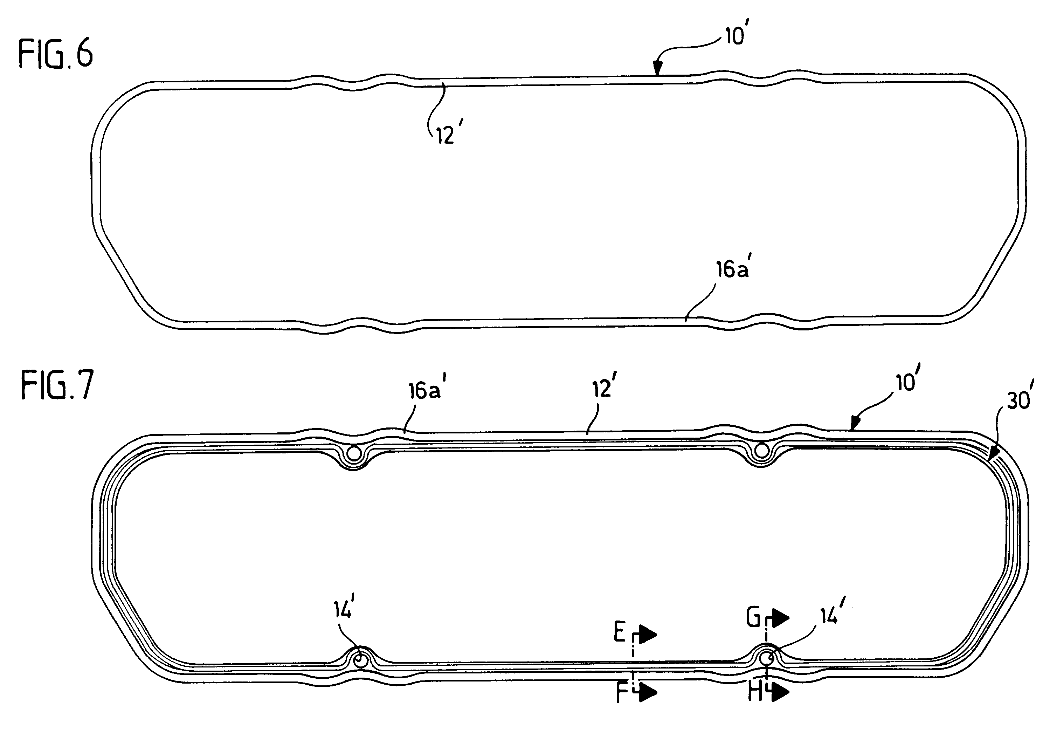

Die Figuren 4 und 5 zeigen Schnitte durch die fertige Dichtung, welche einen Dichtungskörper 30 aus einem gummielastischen Werkstoff aufweist, in den das Verstärkungselement 10 eingebettet ist. Der Dichtungskörper 30 hat oben und unten jeweils zwei um die Dichtung herumlaufende Dichtlippen 32, deren Lage und Gestaltung jedoch nicht Gegenstand der vorliegenden Erfindung ist.

Wie die Figuren 4 und 5 erkennen lassen, ist die Dichtung zu einer bei 36 strichpunktiert angedeuteten Mittelebene symmetrisch.

Nach einem weiteren Merkmal der Erfindung wurde der Dichtungskörper 30 in einem derart gestalteten Spritzgußwerkzeug, in welches das Verstärkungselement 10 eingelegt wurde, hergestellt, daß die oberen und unteren Abflachungen 16a der oberen und unteren Windung 20 bzw. 22 einer jeden Drahtwendel 16 nicht in den Werkstoff des Dichtungskörpers 30 eingebettet sind, sondern vielmehr an der jeweiligen Hauptoberfläche der Dichtung liegen, um so zu verhindern, daß irgendwo der gummielastische Werkstoff des Dichtungskörpers 30 beim Anziehen der durch die Schraubendurchgangsöffnungen 14 hindurchgeführten Befestigungsschrauben zu stark verformt oder sogar beschädigt wird - allein die übereinanderliegenden Bereiche der Windungen 20, 22 wirken als Abstützelemente und Verformungsbegrenzer.

Schließlich zeigt die Fig. 4, daß dank der starken Abflachung des Metalldrahtes 12 in den Bereichen des Verstärkungselements 10 zwischen den Schraubendurchgangsöffnungen der elastomere Dichtungskörper 30 oberhalb und unterhalb des Verstärkungselements eine verhältnismäßig große Wandstärke aufweist.

Die zweite, in den Figuren 6 - 9 dargestellte Ausführungsform der erfindungsgemäßen Dichtung unterscheidet sich von der ersten Ausführungsform im wesentlichen nur durch die Gestaltung der Verpressungsbegrenzungselemente, zusätzlich aber auch noch durch die Anordnung des metallischen Verstärkungselements relativ zum elastomeren Dichtungskörper; diese zweite Ausführungsform wird jedoch im folgenden nur noch insoweit beschrieben werden, als es für das Verständnis dieser Unterschiede erforderlich ist.

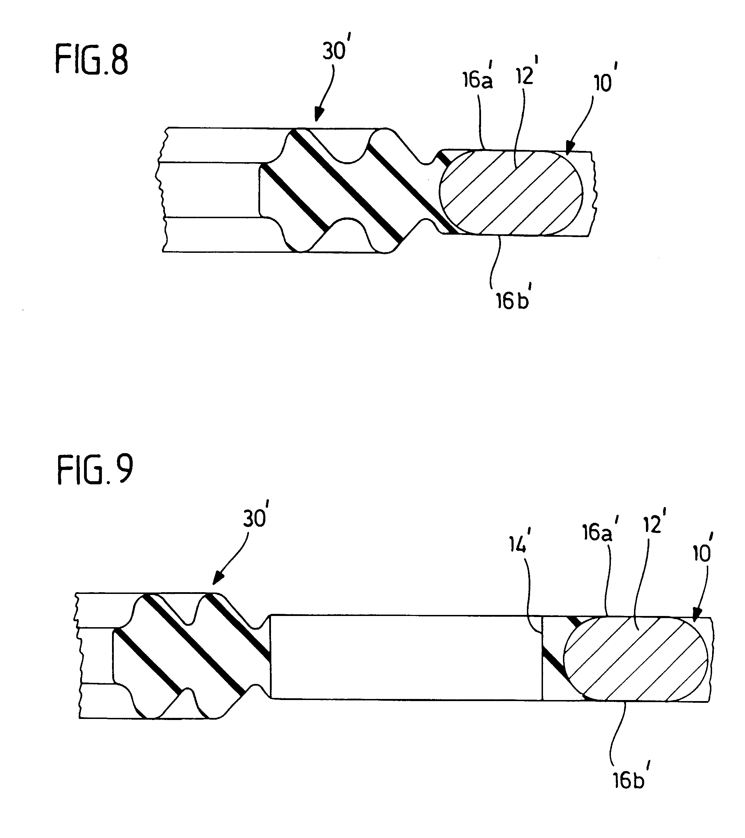

Bei der zweiten Ausführungsform ist das von einem Metalldraht 12' gebildete Verstärkungselement 10' nicht in den elastomeren Dichtungskörper 30' eingebettet; vielmehr ist letzterer an das Verstärkungselement 10' angespritzt, und zwar vorzugsweise an die Innenseite des vom Metalldraht 12' gebildeten Rahmens (siehe insbesondere die Figuren 8 und 9).

Erfindungsgemäß hat der Metalldraht 12' um die ganze Dichtung herum denselben Querschnitt mit einer oberen und einer unteren ebenen Abflachung 16a' bzw. 16b', welche Teilbereiche der oberen bzw. unteren Hauptoberfläche der Dichtung bilden. Wie vor allem die Fig. 9 erkennen läßt, bildet der Metalldraht 12' so auch in unmittelbarer Nachbarschaft aller Schraubendurchgangsöffnungen 14' ein Verpressungsbegrenzungselement für den elastomeren Dichtungskörper 30'.

Obwohl nicht bevorzugt, kann es unter Umständen zweckmäßig sein, aus Dämpfungsgründen die erfindungsgemäße Dichtung so herzustellen, daß die obere und/oder die untere Abflachung 16a oder 16a' bzw. 16b' mit einer dünnen Schicht aus dem Werkstoff des elastomeren Dichtungskörpers 30 bzw. 30' bedeckt ist; dank der genannten Abflachungen bestehen dann zu der Dichtung nach der DE-PS 37 37 833 immer noch die wesentlichen Unterschiede, daß das elastomere Material nicht zwischen einer Drahtkuppe und dem Zylinderkopf bzw. Zylinderkopfdeckel gequetscht wird, und bei einem über seine ganze Länge abgeflachten Metalldraht ist das aus diesem gebildete Verstärkungselement auch weit formstabiler als dasjenige der bekannten Dichtung; außerdem kann bei Verwendung der erfindungsgemäßen Dichtung auch nicht ein weiterer nachteiliger Effekt auftreten, zu dem die aus der DE-PS 37 37 833 hervorgehende Dichtung führen kann: Beim Anziehen der Befestigungsschrauben können die Kuppen des Metalldrahts nämlich zu Markierungen in den an die Dichtung angrenzenden Bauteilen führen, welche sich im Falle eines Auswechselns der Dichtung durchaus als nachteilig erweisen können.

Grundsätzlich wäre es denkbar, daß der Metalldraht keinen vollständig geschlossenen Rahmen bildet, obwohl natürlich Ausführungsformen zu bevorzugen sind, bei denen der Metalldraht einen solchen geschlossenen Rahmen bildet.

Wie bei der vorstehend erörterten Dichtung nach der DE-PS 37 37 833 kann auch bei der erfindungsgemäßen Dichtung die Verstärkungseinlage aus mehreren miteinander verschweißten oder verlöteten Metalldrahtsegmenten zusammengesetzt sein.

Schließlich sei noch darauf hingewiesen, daß ein aus einem Metalldraht gebildetes Verstärkungselement im Vergleich zu einem aus Metallblech hergestellten Verstärkungselement den Weg für eine weitere Kosteneinsparung eröffnet: Die für solche Dichtungen erforderlichen elastomeren Werkstoffe sind weit teurer als die für die Verstärkungselemente einzusetzenden Metalle; wollte man nun durch Vergrößerung der Blechdicke elastomeres Material einsparen, ließen sich aus einem solchen Blech die rahmenförmigen Verstärkungselemente nicht mehr herstellen (diesbezüglich wird auf die eingangs gemachten Ausführungen zum Stand der Technik verwiesen). Wohl aber läßt sich ein Draht, welcher, um elastomeres Material zu sparen, eine verhältnismäßig große Querschnittsfläche aufweist, ohne weiteres durch Biegen in die für das Verstärkungselement gewünschte Form bringen. Dieser Gesichtspunkt ist vor allem in denjenigen Fällen von Bedeutung, in denen die die Dichtung zwischen sich einschließenden Bauteilflächen größere Höhendifferenzen aufweisen, die durch bereichsweise unterschiedliches Prägen eines aus Metalldraht hergestellten Verstärkungselements berücksichtigt werden können, so daß der aus elastomerem Werkstoff hergestellte Dichtungskörper trotz dieser Höhendifferenzen kein großes Volumen haben muß, d. h. für seine Herstellung keine großen Mengen an elastomerem Werkstoff benötigt.

## Patentansprüche

1. Rahmenförmige Dichtung, insbesondere Hauben- bzw. Deckeldichtung von Verbrennungsmotoren, mit zwei voneinander abgewandten, Dichtflächen bildenden Hauptoberflächen, einem Dichtungskörper aus einem gummielastischen Werkstoff, einem sich längs dieses Dichtungskörpers erstreckenden und mit dem gummielastischen Werkstoff verbundenen metallischen Verstärkungselement sowie mit längs der Dichtung im Abstand voneinander angeordneten Schraubenöffnungen für senkrecht zur Dichtungsebene verlaufende Schrauben, bei der das Verstärkungselement zumindest im Bereich eines Teils der Schraubenöffnungen Verpressungsbegrenzungselemente für den gummielastischen Dichtungskörper bildet, welche an ihren in Durchlaßrichtung der Schraubenöffnungen einander gegenüberliegenden Seiten flache und quer zu dieser Richtung verlaufende Oberflächenbereiche aufweisen, **dadurch gekennzeichnet,** daß das Verstärkungselement ein zu einem Rahmen (10; 10') gebogener Metalldraht (12; 12') ist, welcher über seine ganze Länge einen durch Kaltverformung des Metalldrahts in Durchlaßrichtung der Schraubenöffnungen (14; 14') herbeigeführten, von einem kreisrunden Querschnitt abweichenden abgeflachten Querschnitt aufweist.

2. Dichtung nach Anspruch 1, dadurch gekennzeichnet, daß der Metalldraht (12; 12') einen geschlossenen Rahmen (10; 10') bildet.

3. Dichtung nach einem oder mehreren der vorstehenden Ansprüche, dadurch gekennzeichnet, daß der Metalldraht (12) im Bereich zumindest eines Teils der Schraubendurchgangsöffnungen (14) jeweils zu einer ein Verpressungsbegrenzungselement bildenden Drahtwendel (16) geformt ist.

4. Dichtung nach Anspruch 3, dadurch gekennzeichnet, daß, senkrecht auf die Dichtung gesehen, die die Wendel (16) bildenden Drahtabschnitte (20, 22) übereinander liegen.

5. Dichtung nach Anspruch 4, dadurch gekennzeichnet, daß jeder der die Wendel (16) bildenden Drahtabschnitte (20, 22) auf seinen beiden in Durchlaßrichtung der Schraubenöffnungen (14) einander gegenüberliegenden Seiten abgeflacht ist.

6. Dichtung nach Anspruch 4 oder 5, dadurch gekennzeichnet, daß der Metalldraht (12) die Schraubendurchgangsöffnung (14) über einen Winkel von mindestens 360° und weniger als 720° umschlingt, so daß um die Schraubendurchgangsöffnung herum maximal zwei Drahtabschnitte (20, 22) übereinander liegen.

7. Dichtung nach Anspruch 6, dadurch gekennzeichnet, daß im Bereich der Schraubendurchgangsöffnung (14) der Metalldraht (12) beidseits der Wendel (16) in Richtung auf das Innere der rahmenförmigen Dichtung eingebogen ist (bei 18), so daß der Umschlingungswinkel größer als 360° ist.

8. Dichtung nach Anspruch 6 oder 7, dadurch gekennzeichnet, daß der Umschlingungswinkel maximal ungefähr 540° beträgt.

9. Dichtung nach Anspruch 6 oder 7, dadurch gekennzeichnet, daß der Umschlingungswinkel kleiner als 540° ist.

10. Dichtung nach einem oder mehreren der Ansprüche 3 bis 9, dadurch gekennzeichnet, daß der Abflachungsgrad des Metalldrahtes (12) längs der Dichtung unterschiedlich ist.

11. Dichtung nach einem oder mehreren der Ansprüche 3 bis 10, dadurch gekennzeichnet, daß der Metalldraht (12) für alle Schraubendurchgangsöffnungen (14) jeweils eine Drahtwendel (16) bildet.

12. Dichtung nach einem oder mehreren der vorstehenden Ansprüche, dadurch gekennzeichnet, daß die in Durchlaßrichtung der Schraubenöffnungen (14; 14') einander gegenüberliegenden Seiten der Verpressungsbegrenzungselemente (16; 12') Teile der beiden Hauptoberflächen der Dichtung bilden.

13. Dichtung nach einem oder mehreren der vorstehenden Ansprüche, dadurch gekennzeichnet, daß der Metalldraht (12; 12') durch Prägen bzw. Formpressen kaltverfestigt ist.

## Claims

1. Frame-shaped gasket, in particular, cover gasket of internal combustion engines, with two main surfaces forming sealing surfaces facing away from one another, a sealing body made of rubber-elastic material, a metallic reinforcing element extending along this sealing body and joined to the rubber-elastic material, and screw openings arranged in spaced relation to one another along the gasket for screws extending vertically to the gasket plane, wherein at least in the area of some of the screw openings, the reinforcing element forms elements for limiting pressure-induced deformation of the rubber-elastic sealing body, said limiting elements having at their sides located opposite one another in through direction of the screw openings flat surface regions extending transversely to this direction, characterized in that the reinforcing element is a metal wire (12; 12') bent to a frame (10; 10') and having over its entire length a non-circular, flattened cross section brought about by cold forming of the metal wire in through direction of the screw openings (14; 14').

2. Gasket as defined in claim 1, characterized in that the metal wire (12; 12') forms a closed frame (10; 10').

3. Gasket as defined in any one or several of the preceding claims, characterized in that in the region of at least some of the screw openings (14), the metal wire (12) is shaped into a wire coil (16) which forms an element for limiting pressure-induced deformation.

4. Gasket as defined in claim 3, characterized in that in a vertical view of the gasket, the wire sections (20, 22) forming the coil (16) lie one on the other.

5. Gasket as defined in claim 4, characterized in that each of the wire sections (20, 22) forming the coil (16) is flattened on both its sides opposite one another in through direction of the screw openings (14).

6. Gasket as defined in claim 4 or 5, characterized in that the metal wire (12) loops around the screw opening (14) over an angle of at least 360° and less than 720° so that a maximum of two wire sections (20, 22) lie one on the other around the screw opening.

7. Gasket as defined in claim 6, characterized in that in the region of the screw opening (14), the metal wire (12) is bent inwards (at 18) on either side of the coil (16) in the direction towards the inside of the frame-shaped gasket so that the loop angle is greater than 360°.

8. Gasket as defined in claim 6 or 7, characterized in that the loop angle is at most approximately 540°.

9. Gasket as defined in claim 6 or 7, characterized in that the loop angle is less than 540°.

10. Gasket as defined in any one or several of claims 3 to 9, characterized in that the degree of flattening of the metal wire (12) along the gasket differs.

11. Gasket as defined in any one or several of claims 3 to 10, characterized in that the metal wire (12) forms a wire coil (16) for each of all of the screw openings (14).

12. Gasket as defined in any one or several of the preceding claims, characterized in that the sides of the elements (16; 12') for limiting pressure-induced deformation which are located opposite one another in through direction of the screw openings (14; 14') form parts of the two main surfaces of the gasket.

13. Gasket as defined in any one or several of the preceding claims, characterized in that the metal wire (12; 12') is cold-worked by coining or compression moulding.

## Revendications

1. Joint en forme de cadre, en particulier joint de capotage ou de couvercle de moteur à combustion interne, comportant deux surfaces principales, opposées l'une à l'autre, formant des surfaces d'étanchéité, un corps de joint en matériau à élasticité de type caoutchouc, un élément métallique d'armature s'étendant le long de ce corps de joint et lié au matériau à élasticité de type caoutchouc, ainsi que des ouvertures pour vis, disposées le long du joint, à une certaine distance l'une de l'autre, pour des vis orientées perpendiculairement au plan du joint, dans le cas duquel l'élément d'armature forme, au moins au voisinage d'une partie des ouvertures pour vis, pour le corps de joint à élasticité de type caoutchouc, des éléments de limitation de compression qui, sur leurs faces opposées l'une à l'autre selon la direction du passage des ouvertures pour vis, présentent des zones de surface plates et orientées transversalement à cette direction, caractérisé par le fait que l'élément d'armature est un fil métallique (12 ; 12') qui est cintré pour donner un cadre (10 ;10') et qui, sur toute sa longueur, présente une section aplatie, s'écartant d'une section circulaire, réalisée par déformation à froid du fil métallique selon la direction du passage des ouvertures pour vis (14 ;14').

2. Joint selon la revendication 1, caractérisé par le fait que le fil métallique (12 ;12') forme un cadre fermé (10 ;10').

3. Joint selon une ou plusieurs des revendications précédentes, caractérisé par le fait qu'au voisinage d'au moins une partie des ouvertures de passage de vis (14), le fil métallique (12) est chaque fois formé pour donner une spire de fil (16) formant un élément de limitation de compression.

4. Joint selon la revendication 3, caractérisé par le fait que, vu perpendiculairement au joint, les tronçons de fil (20, 22) formant la spire (16) sont situés l'un au dessus de l'autre.

5. Joint selon la revendication 4, caractérisé par le fait que chacun des tronçons de fil (20, 22) formant la spire est aplati sur ses deux faces opposées l'une à l'autre selon la direction du passage des ouvertures pour vis (14).

6. Joint selon la revendication 4 ou 5, caractérisé par le fait que le fil métallique (12) encercle l'ouverture de passage pour vis (14) sur un angle d'au moins 360° et de moins de 720°, de sorte que deux tronçons de fil (20, 22) au maximum se situent l'un au dessus l'autre autour de l'ouverture de passage pour vis.

7. Joint selon la revendication 6, caractérisé par le fait qu'au voisinage de l'ouverture de passage de vis (14) le fil métallique (12) est, des deux côtés de la spire (16), cintré en direction de l'intérieur du joint en forme de cadre (en 18), de sorte que l'angle d'encerclement est supérieur à 360°.

8. Joint selon la revendication 6 ou 7, caractérisé par le fait que l'angle d'encerclement vaut au maximum environ 540°.

9. Joint selon la revendication 6 ou 7, caractérisé par le fait que l'angle d'encerclement est inférieur à 540°.

10. Joint selon une ou plusieurs des revendications 3 à 9, caractérisé par le fait que le taux d'aplatissement du fil métallique (12) est différent le long du joint.

11. Joint selon une ou plusieurs des revendications 3 à 10, caractérisé par le fait que, pour toutes les ouvertures de passage de vis (14), le fil métallique (12) forme chaque fois une spire de fil (16).

12. Joint selon une ou plusieurs des revendications précédentes, caractérisé par le fait que les faces, opposées l'une à l'autre selon la direction de passage des ouvertures de vis (14 ;14'), des éléments de limitation de compression (16; 12') forment des parties des deux surfaces principales du joint.

13. Joint selon une ou plusieurs des revendications précédentes, caractérisé par le fait que le fil métallique (12 ;12') est écroui par estampage ou pressage en forme.
